# EUROPEAN PATENT APPLICATION

(11) **EP 4 815 419 A1**
(43) Date of publication of application: **30.09.2026**
(21) Application number: 25189308.7
(22) Date of filing: 14.07.2025
(51) Int. Cl.: H04N 1/00, H04N 1/393

(54) **INFORMATION PROCESSING SYSTEM, INFORMATION PROCESSING PROGRAM, AND IMAGE READING APPARATUS**

(30) Priority: 25.03.2025 JP 2025050782
(71) Applicant: FUJIFILM Business Innovation Corp., Minato-ku Tokyo (JP)
(72) Inventor: HAYASHI, Kazuo, Yokohama-shi, Kanagawa (JP); KATO, Seishiro, Yokohama-shi, Kanagawa (JP); NODA, Hisashi, Yokohama-shi, Kanagawa (JP)
(74) Representative: Becker Kurig & Partner Patentanwälte mbB

(57) **Abstract**

An information processing system includes a processor configured to, in a reading apparatus that transports a document and reads an image of the document, in a case where a first document length measured from the transported document and a second document length calculated from the read image are different from each other, execute at least one of a notification process of notifying a user or a correction process of correcting a length of image information of the read image.

## Description

### BACKGROUND OF THE INVENTION

### (i) Field of the Invention

The present disclosure relates to an information processing system, an information processing program, and an image reading apparatus.

### (ii) Description of Related Art

JP2022-119565A discloses an image reading apparatus including an operation unit, a display unit, a transport unit, a reading unit, a document length detection unit, and a control unit. The operation unit receives an input including a parameter representing a length of a document. The display unit displays information. The transport unit transports the document. The reading unit reads image data of the document transported by the transport unit. The document length detection unit detects information related to the length of the document transported by the transport unit. The control unit calculates a correction value based on a first length in a transport direction that has been acquired based on a detection result of the document length detection unit and a second length based on a parameter input by the operation unit and performs a first correction process of correcting the length of the image data in the transport direction with the correction value.

### SUMMARY OF THE INVENTION

As an information processing system, an information processing system is considered in which, in a reading apparatus that transports a document and reads an image of the document, in a case where a first document length designated by a user and a second document length calculated from the read image are different from each other, a processor executes at least one of a notification process of notifying a user or a correction process of correcting a length of image information of the read image.

In the information processing system, in a case where the user erroneously designates the first document length, at least one of the notification process or the correction process may be executed even though the actual document length and the second document length are equal to each other.

An object of the present disclosure is to suppress execution of at least one of a notification process or a correction process in a case where an actual document length and a second document length calculated from a read image are equal to each other, as compared to a case where a processor executes at least one of the notification process or the correction process in a case where a first document length designated by a user and the second document length are different from each other in a reading apparatus.

According to a first aspect of the present disclosure, there is provided an information processing system including a processor configured to, in a reading apparatus that transports a document and reads an image of the document, in a case where a first document length measured from the transported document and a second document length calculated from the read image are different from each other, execute at least one of a notification process of notifying a user or a correction process of correcting a length of image information of the read image.

According to a second aspect of the present disclosure, in the first aspect, the processor may be configured to: in a case where the second document length is longer than the first document length, reduce the length of the image information as the correction process; and, in a case where the second document length is shorter than the first document length, increase the length of the image information as the correction process.

According to a third aspect of the present disclosure, in the second aspect, the processor may be configured to: acquire variation information of a transport speed of the document; in a case where the second document length is longer than the first document length, locally reduce the length of the image information based on the variation information as the correction process; and, in a case where the second document length is shorter than the first document length, locally increase the length of the image information based on the variation information as the correction process.

According to a fourth aspect of the present disclosure, in any one of the first to third aspects, the processor may be configured to, in the reading apparatus, in a case where the first document length and the second document length are different from each other, provide a notification to prompt re-reading of the document to the user as the notification process.

According to a fifth aspect of the present disclosure, in the fourth aspect, the processor may be configured to, in a case where an execution instruction to re-read the document is acquired, transport the document at a speed lower than a transport speed before the re-reading to read the image or read the image of the document in a stationary state.

According to a sixth aspect of the present disclosure, there is provided an information processing program causing a computer to execute a process including, in a reading apparatus that transports a document and reads an image of the document, in a case where a first document length measured from the transported document and a second document length calculated from the read image are different from each other, executing at least one of a notification process of notifying a user or a correction process of correcting a length of image information of the read image.

According to a seventh aspect of the present disclosure, there is provided an image reading apparatus including: a transport unit that transports a document; a reading unit that reads an image of the document; and an execution unit that, in a case where a first document length measured from the document transported by the transport unit and a second document length calculated from the read image read by the reading unit are different from each other, executes at least one of notifying a user or correcting a length of image information of the read image.

According to the configuration of the first aspect of the present disclosure, as compared to a case where the processor executes at least one of the notification process or the correction process in a case where the first document length designated by the user and the second document length calculated from the read image are different from each other in the reading apparatus, the execution of at least one of the notification process or the correction process is suppressed in a case where the actual document length and the second document length are equal to each other.

According to the configuration of the second aspect of the present disclosure, it is easier to match the length of the image information with the actual length, as compared to a case where the processor always reduces the length of the image information as the correction process in a case where the first document length and the second document length are different from each other.

According to the configuration of the third aspect of the present disclosure, it is easier to match the length of each portion of the image information with the actual length, as compared to a case where the processor uniformly reduces the overall length of the image information as the correction process in a case where the second document length is longer than the first document length and uniformly increases the overall length of the image information as the correction process in a case where the second document length is shorter than the first document length.

According to the configuration of the fourth aspect of the present disclosure, it is easier for the user to recognize that the document needs to be re-read, as compared to a case where the processor notifies the user only that the first document length and the second document length are different from each other in a case where the first document length and the second document length are different from each other in the reading apparatus.

According to the configuration of the fifth aspect of the present disclosure, in a case where the processor always executes the same reading operation, the read image is less likely to be enlarged and reduced in the re-reading of the document.

According to the configuration of the sixth aspect of the present disclosure, as compared to a case where the processor executes at least one of the notification process or the correction process in a case where the first document length designated by the user and the second document length calculated from the read image are different from each other in the reading apparatus, the execution of at least one of the notification process or the correction process is suppressed in a case where the actual document length and the second document length are equal to each other.

According to the configuration of the seventh aspect of the present disclosure, as compared to a case where the execution unit executes at least one of notifying the user or correcting the length of the image information of the read image in a case where the first document length designated by the user and the second document length calculated from the read image are different from each other, the execution of at least one of the notification or the correction is suppressed in a case where the actual document length and the second document length are equal to each other.

### BRIEF DESCRIPTION OF THE DRAWINGS

Exemplary embodiment(s) of the present invention will be described in detail based on the following figures, wherein:
FIG. 1 is a schematic diagram showing an image reading system according to the present exemplary embodiment;
FIG. 2 is a block diagram showing an example of an information processing apparatus according to the present exemplary embodiment;
FIG. 3 is a block diagram showing an example of a functional configuration of the information processing apparatus according to the present exemplary embodiment;
FIG. 4 is a flowchart showing an example of an image reading flow according to the present exemplary embodiment;
FIG. 5 is a flowchart showing an example of an image reading flow according to a modification example;
FIG. 6 is a schematic diagram showing an image reading system including an image reading apparatus according to a modification example; and
FIG. 7 is a flowchart showing an example of an image reading flow according to another modification example.

### DETAILED DESCRIPTION OF THE INVENTION

Hereinafter, an example of an exemplary embodiment of the present invention will be described with reference to the drawings.

### <Image Reading System 100>

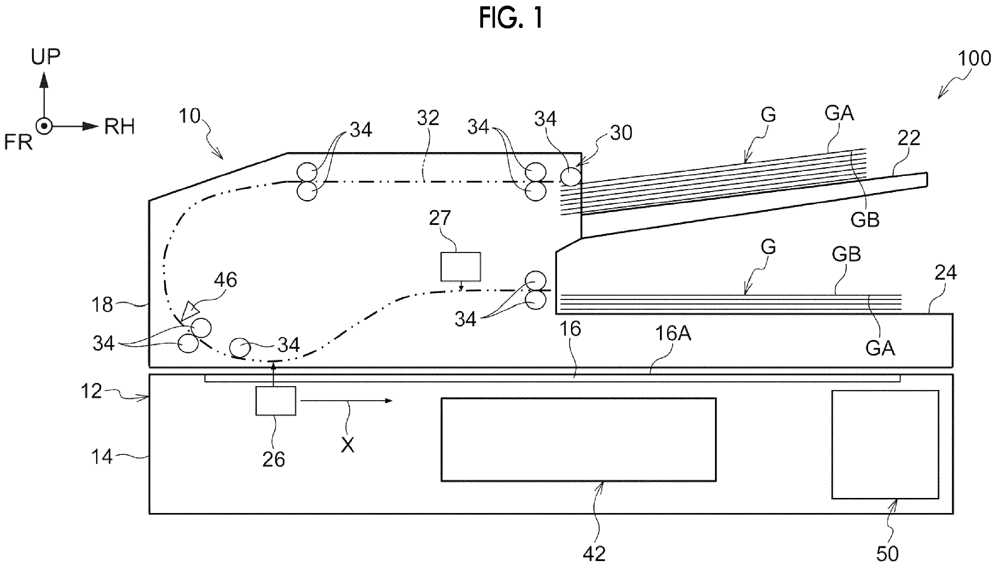

An image reading system 100 according to the present exemplary embodiment will be described. FIG. 1 is a schematic diagram showing the image reading system 100.

In addition, an arrow UP shown in each of the drawings including FIG. 1 indicates an upper side of an apparatus provided in the system. Therefore, an opposite direction of the arrow UP is a lower side of the apparatus. Further, an arrow FR shown in each of the drawings including FIG. 1 indicates a front side of the apparatus. Therefore, an opposite direction of the arrow FR is a rear side of the apparatus. Furthermore, an arrow RH shown in each of the drawings including FIG. 1 indicates a right side of the apparatus. Therefore, an opposite direction of the arrow RH is a left side of the apparatus. Since these directions are directions defined for convenience of description, a configuration of the apparatus is not limited to these directions.

Moreover, a front-rear direction and a right-left direction are directions that can be called a lateral direction, a side direction, and a horizontal direction. In addition, the term "apparatus" may be omitted in each direction of the apparatus. That is, for example, "the upper side of the apparatus" may simply be described as "the upper side". Furthermore, a symbol having "·" written in "∘" in the drawings means an arrow pointing from the back to the front of the paper.

The image reading system 100 is a system that reads an image of a document G. Specifically, as shown in FIG. 1, the image reading system 100 includes an image reading apparatus 10 and an information processing apparatus 50. Hereinafter, each unit of the image reading system 100 will be described. The image reading system 100 is an example of an information processing system.

### <Image Reading Apparatus 10>

The image reading apparatus 10 shown in FIG. 1 is an apparatus that reads the image of the document G. Specifically, as shown in FIG. 1, the image reading apparatus 10 includes an apparatus main body 12, an opening and closing unit 18, a document accommodation unit 22, and a document discharge unit 24. Further, the image reading apparatus 10 includes a transport unit 30, reading units 26 and 27, and a display unit 42. Hereinafter, each unit of the image reading apparatus 10 will be described. Further, the image reading apparatus 10 is an example of a reading apparatus.

### <Apparatus Main Body 12>

The apparatus main body 12 shown in FIG. 1 is a portion in which each component of the image reading apparatus 10 is provided. The apparatus main body 12 includes a housing 14 and a platen glass 16.

The housing 14 is formed in a box shape with an opening at the top. The platen glass 16 is disposed in the opening of the housing 14. The document G, whose image is to be read in a stationary state, is placed on an upper surface 16A of the platen glass 16. The platen glass 16 transmits light emitted from the reading unit 26 to the document G placed on the upper surface 16A.

In the present exemplary embodiment, the reading unit 26 and the information processing apparatus 50 are disposed inside the apparatus main body 12 (specifically, the housing 14) as shown in FIG. 1. In addition, the display unit 42 is disposed on an outer surface (specifically, a front surface) of the apparatus main body 12.

### <Opening and Closing unit 18>

The opening and closing unit 18 shown in FIG. 1 is a structural portion that is opened and closed with respect to the apparatus main body 12. The opening and closing unit 18 is attached to the apparatus main body 12 to be openable and closable between a closed position (a position shown in FIG. 1) where the upper surface 16A of the platen glass 16 of the apparatus main body 12 is covered and an open position where the upper surface 16A of the platen glass 16 of the apparatus main body 12 is exposed. For example, the opening and closing unit 18 has a rear end portion that is supported by a support portion (not shown) provided on the rear side of the apparatus main body 12 and is opened and closed by moving a front end portion up and down with the rear end portion as a fulcrum.

Further, the opening and closing unit 18 also functions as a structure in which each component of the image reading apparatus 10 is provided. In the present exemplary embodiment, the transport unit 30 and the reading unit 27 are disposed inside the opening and closing unit 18 as shown in FIG. 1. In addition, the document accommodation unit 22 and the document discharge unit 24 are disposed on the side of the opening and closing unit 18 (the right side in FIG. 1) as shown in FIG. 1.

### <Document Accommodation Unit 22>

The document accommodation unit 22 shown in FIG. 1 is a portion that accommodates the document G in the image reading apparatus 10. As shown in FIG. 1, the document accommodation unit 22 extends from the opening and closing unit 18 to a side (specifically, an upper right diagonal side). The document G is stacked on the document accommodation unit 22, and the document accommodation unit 22 accommodates the stacked document G.

The document G accommodated in the document accommodation unit 22 is an object whose image is to be read by the reading units 26 and 27. Examples of the document G include paper and films. Examples of the film include a resin film and a metal film. In addition, the document G is not limited to the above, and various documents can be used.

### <Document Discharge Unit 24>

The document discharge unit 24 shown in FIG. 1 is a portion from which the document G transported by the transport unit 30 is discharged. As shown in FIG. 1, the document discharge unit 24 extends from the opening and closing unit 18 to the side (specifically, the right side) below the document accommodation unit 22. The document G transported by the transport unit 30 is stacked on the document discharge unit 24, and the document discharge unit 24 accommodates the document G.

### <Transport Unit 30>

The transport unit 30 shown in FIG. 1 is a component that transports the document G in the image reading apparatus 10. In the present exemplary embodiment, the transport unit 30 includes a document transport path 32 and a plurality of transport members 34.

The document transport path 32 is a transport path through which the document G is transported. As shown in FIG. 1, the document transport path 32 is formed in a substantially C-shape in a front view from the document accommodation unit 22 to the document discharge unit 24. In addition, the front view means a view from the front side to the rear side.

The transport member 34 is configured as, for example, a transport roller that is rotationally driven. The transport member 34 transports the document G accommodated in the document accommodation unit 22 to the document discharge unit 24 along the document transport path 32. Further, the transport member 34 may be, for example, a transport member, such as a transport belt or a transport drum, and various transport members can also be used.

### <Reading Units 26 and 27>

The reading units 26 and 27 shown in FIG. 1 are components that read the image of the document G transported by the transport unit 30. The reading unit 26 is provided below the platen glass 16 in the apparatus main body 12. The reading unit 26 faces one surface (hereinafter, referred to as a reading surface GA) of the document G transported through the document transport path 32, with the platen glass 16 interposed between the reading unit 26 and the one surface. The reading unit 26 irradiates the reading surface GA of the document G transported through the document transport path 32 with light and focuses reflected light from the reading surface GA with an image sensor to read an image.

The reading unit 26 can read images of both the document G transported by the transport unit 30 and the document G placed on the upper surface 16A of the platen glass 16. In a case where the image of the document G placed on the upper surface 16A of the platen glass 16 is read, the reading unit 26 is moved in a direction of an arrow X along the platen glass 16 to read the image of the reading surface GA of the document G.

As shown in FIG. 1, the reading unit 27 is disposed on an inner peripheral side of the document transport path 32 having the substantially C-shape on the downstream side of the reading unit 26 in the transport direction in the document transport path 32. The reading unit 27 faces a surface (hereinafter, referred to as an opposite surface GB) that is opposite to the reading surface GA of the document G transported through the document transport path 32. The reading unit 27 irradiates the opposite surface GB of the document G transported through the document transport path 32 with light and focuses reflected light from the opposite surface GB with an image sensor to read an image.

For example, a contact-type image sensor that is called a contact image sensor (CIS) is used as the reading units 26 and 27. In addition, the image sensor used in the reading units 26 and 27 is not limited to the contact-type image sensor and may be, for example, an image sensor such as a charge coupled device (CCD) or a complementary metal oxide semiconductor (CMOS). Various reading units that can read the image of the document G can be used as the reading unit according to the present disclosure.

### <Display Unit 42>

The display unit 42 displays presentation information to be presented to the user to notify the user of the presentation information. Examples of the display unit 42 include a liquid crystal display and an organic electro-luminescence (EL) display. Various notifications can be displayed on the display unit 42.

Further, the display unit 42 functions as an input unit to which an instruction from the user is input. In the present exemplary embodiment, the display unit 42 is configured as, for example, a resistive touch panel or a capacitive touch panel, and an instruction from the user is input to the display unit 42 by a contact operation of the user. The user is an example of a user.

Further, the input unit may be configured separately from the display unit 42. In this case, the input unit may be configured as, for example, an input key (for example, a keyboard, a mouse, or an operation button) through which an input operation is performed by the user.

### <Detection Unit 46>

A detection unit 46 detects, for example, leading and trailing ends of the document G transported by the transport unit 30. The detection unit 46 can detect a document length (that is, a dimension along the transport direction) of the document G, based on a detection time from the detection of the leading end of the document G to the detection of the trailing end of the document G and a transport speed of the document G.

The detection unit 46 is disposed on the upstream side of the reading unit 26 in the transport direction in the document transport path 32. Therefore, at least the leading end of the document G is detected before the image of the document G is read by the reading unit 26. For example, a reflection-type or transmission-type optical sensor is used as the detection unit 46.

### <Information Processing Apparatus 50>

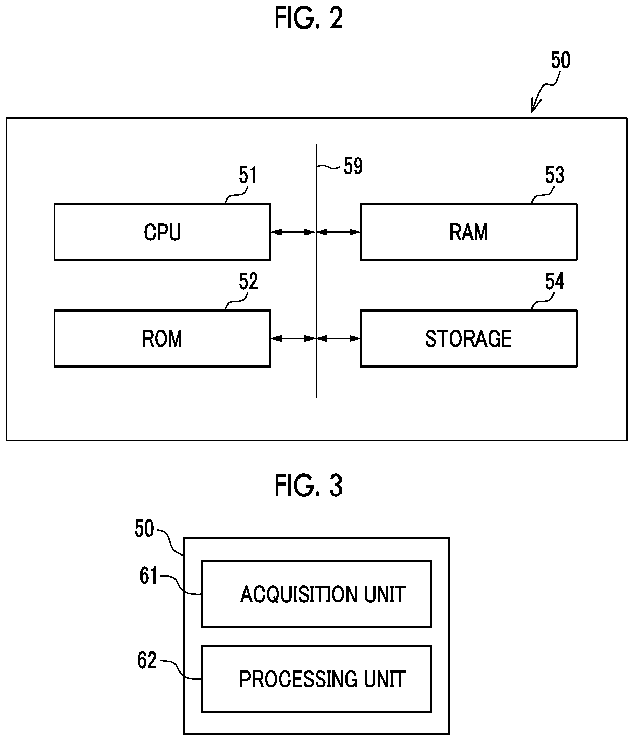

The information processing apparatus 50 has functions of a computer and includes a central processing unit (CPU) 51, a read only memory (ROM) 52, a random access memory (RAM) 53, and a storage 54 as shown in FIG. 2. The CPU 51, the ROM 52, the RAM 53, and the storage 54 are connected to each other via a connection line 59.

The CPU 51 is a central processing unit and executes various programs including an information processing program or controls each unit. The ROM 52 stores various programs including the information processing program and various types of data. The RAM 53 temporarily stores programs or data as a work area. The storage 54 is configured as a storage medium, such as a hard disk drive (HDD), a solid state drive (SSD), or a flash memory, and stores various programs including an operating system and various types of data. In addition, the information processing program may be stored in the storage 54.

In the information processing apparatus 50, the CPU 51 reads various programs including the information processing program from the ROM 52 or from the storage 54 and executes the programs using the RAM 53 as the work area. The CPU 51 executes the information processing program to implement various functions. Hereinafter, a functional configuration implemented by cooperation between the CPU 51 as a hardware resource and the information processing program as a software resource will be described. FIG. 3 is a block diagram showing an example of the functional configuration of the information processing apparatus 50 according to the present exemplary embodiment.

In the information processing apparatus 50, the CPU 51 executes the information processing program to function as an acquisition unit 61 and a processing unit 62 as shown in FIG. 3.

The acquisition unit 61 acquires various user instructions input by the user via the display unit 42 as the input unit. The acquisition unit 61 acquires, for example, a reading instruction to read the image of the document G as the user instruction.

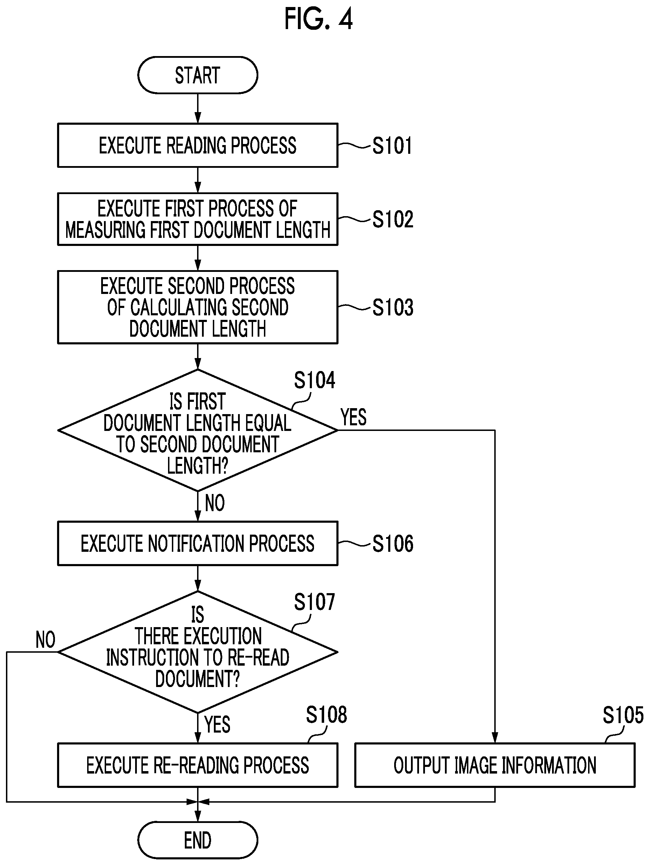

In a case where the acquisition unit 61 acquires the reading instruction, the processing unit 62 executes an image reading flow (see FIG. 4) of reading the image of the document G.

The information processing apparatus 50 may be configured as a single information processing apparatus 50 or may be configured as a plurality of information processing apparatuses 50. Therefore, the process executed by the information processing apparatus 50 may be executed by the single information processing apparatus 50 or may be executed by the plurality of information processing apparatuses 50.

Further, the information processing apparatus 50 may be referred to as a control device that controls each unit of the image reading apparatus 10. The information processing apparatus 50 may be understood as an example of the information processing system. In addition, the information processing apparatus 50 may be understood as a component of the image reading apparatus 10. In this case, the image reading apparatus 10 may be understood as an example of the information processing system.

### <Image Reading Flow>

Next, an example of the image reading flow executed in the image reading system 100 will be described. FIG. 4 is a flowchart showing an example of the image reading flow executed in the image reading system 100. The flow is an example of an information processing method.

The present flow is started to be executed, for example, in a case where the CPU 51 acquires the reading instruction to read the image of the document G. The CPU 51 acquires, for example, the reading instruction as an instruction from the user through the display unit 42.

In a case where the CPU 51 starts the present flow, the CPU 51 executes a reading process of reading the image of the document G in Step S101. In the reading process, in the image reading apparatus 10, the transport unit 30 transports the document G accommodated in the document accommodation unit 22 to the document discharge unit 24, and the reading unit 26 or the reading units 26 and 27 read the image.

The CPU 51 executes a process of measuring a first document length from the document G transported by the transport unit 30 (hereinafter, referred to as a first process) in Step S102. In the first process, in the image reading apparatus 10, the first document length of the document G is measured based on the detection time from the detection of the leading end of the document G to the detection of the trailing end of the document G by the detection unit 46 and the transport speed of the document G. For example, the first document length is measured by multiplying the detection time by the transport speed.

In addition, the first process (Step S102) can be executed after the transport of the document G is started in the reading process (Step S101). Therefore, the first process (Step S102) may be executed in parallel with a portion of the reading process (Step S101).

In Step S103, the CPU 51 executes a process of calculating a second document length from a read image read by the reading unit 26 or the reading units 26 and 27 (hereinafter, referred to as a second process). In the second process, for example, the second document length of the document G is calculated based on the number of pixels of the read image read by the reading unit 26 in the transport direction from the leading end to the trailing end of the document G. For example, the second document length is calculated by measuring the number of pixels of the read image in the transport direction from the leading end to the trailing end of the document G and multiplying the length per pixel unit by the number of pixels.

In addition, the second process (Step S103) can be executed after the reading of the image of the document G is started in the reading process (Step S101). Therefore, the second process (Step S103) may be executed in parallel with a portion of the reading process (Step S101). In addition, a portion or all of the second process (Step S103) may be executed at the same time as the first process (Step S102) or may be executed before the first process (Step S102).

The CPU 51 determines whether or not the first document length is equal to the second document length in Step S104. In a case where the CPU 51 determines that the first document length is equal to the second document length (Step S104: YES), the CPU 51 proceeds to Step S105. In a case where the CPU 51 determines that the first document length is not equal to the second document length (NO in Step S104), the CPU 51 proceeds to Step S106. The equality between the first document length and the second document length is not limited to perfect equality and may include a case where the first document length and the second document length are equal to each other within a predetermined allowable range.

In addition, in a case where a variation in the speed of the document G occurs during the reading of the image of the document G being transported, the read image may be enlarged or reduced in the transport direction. In this case, the first document length and the second document length are not equal to each other. It is considered that the speed variation is caused by uneven rotation of the transport member 34, slipping between the transport member 34 and the document G, and the like.

The CPU 51 outputs the read image read by the reading unit 26 or the reading units 26 and 27 as appropriate image information in Step S105 and ends the present flow. The CPU 51 executes a notification process in Step S106. In the notification process, the CPU 51 notifies the user of, for example, an abnormality in the image reading. Further, the CPU 51 provides a notification to prompt the re-reading of the document G to the user. Specifically, for example, a notification, such as "There is an abnormality in reading the image of the document G. Please re-read the document G", is displayed on the display unit 42. Therefore, the user is prompted to re-read the document G.

In Step S107, the CPU 51 determines whether or not an execution instruction to re-read the document G has been acquired. In a case where the CPU 51 determines that the execution instruction to re-read the document G has been acquired (Step S107: YES), the CPU 51 proceeds to Step S108. In a case where the CPU 51 determines that the execution instruction to re-read the document G has not been acquired (NO in Step S107), the CPU 51 ends the present flow.

The CPU 51 executes a re-reading process in Step S108 and ends the present flow. In the re-reading process, in the image reading apparatus 10, the transport unit 30 transports the document G at a speed lower than the transport speed before the re-reading to read the image of the document G. The transport speed before the re-reading is a transport speed that is normally used.

### <Operation According to Present Exemplary Embodiment>

In the present exemplary embodiment, as described above, in a case where the first document length and the second document length measured from the transported document G are different from each other in the image reading apparatus 10, the CPU 51 executes the notification process of notifying the user of the fact.

Therefore, in a case where the actual document length and the second document length are equal to each other, the execution of the notification process is suppressed, as compared to a case where, in a case where the first document length and the second document length designated by the user are different from each other in the image reading apparatus 10, the CPU 51 executes the notification process of notifying the user of the fact.

Further, in the present exemplary embodiment, in a case where the first document length and the second document length measured from the transported document G are different from each other in the image reading apparatus 10, the CPU 51 executes a process of providing a notification to prompt the re-reading of the document to the user as the notification process.

Therefore, it is easier for the user to recognize that the document G needs to be re-read, as compared to a case where, in a case where the first document length and the second document length measured from the transported document G are different from each other in the image reading apparatus 10, the CPU 51 notifies the user only that the first document length and the second document length are different from each other.

Further, in the present exemplary embodiment, in a case where the CPU 51 acquires the execution instruction to re-read the document G, the CPU 51 transports the document G at a speed lower than the transport speed before the re-reading to read the image.

Therefore, in a case where the CPU 51 causes the image reading apparatus 10 to always execute the same reading operation, the read image is less likely to be enlarged or reduced in the re-reading of the document G.

### <Modification Example of Re-reading Process>

**In** the re-reading process (Step S108), the image reading apparatus 10 is caused to transport the document G at a speed lower than the transport speed before the re-reading and to read the image of the document G. However, the present invention is not limited thereto. **In** the re-reading process, for example, the document G in a stationary state may be read by the image reading apparatus 10. Specifically, in the image reading apparatus 10, the reading unit 26 is moved in the direction of the arrow X along the platen glass 16 to read the image of the document G placed on the upper surface 16A of the platen glass 16.

**In** this case, in the notification process (Step S106), for example, a notification, such as "There is an abnormality in reading the image of the document G. Please place the document G discharged to the document discharge unit 24 on the platen glass 16 and issue a re-reading execution instruction", is displayed on the display unit 42.

Further, in the re-reading process (Step S108), the transport unit 30 of the image reading apparatus 10 may transport the document G at the transport speed that is normally used, without changing the transport speed, and the image of the document G may be read.

### <Modification Example of Notification Process>

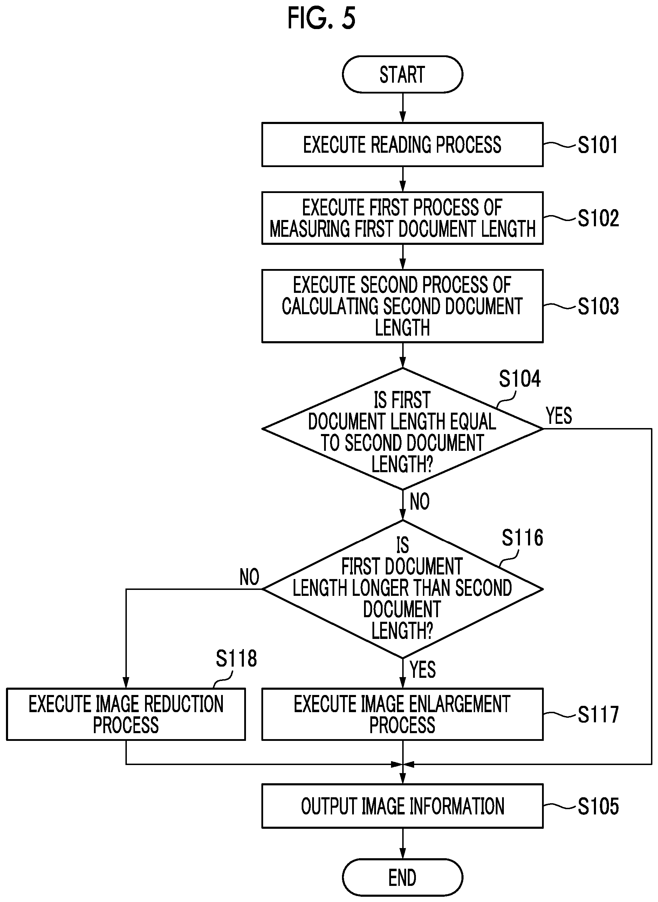

As shown in FIG. 5, the CPU 51 may execute Steps S116, S117, and S118 instead of Steps S106, S107, and S108.

In the present modification example, the CPU 51 determines whether or not the first document length is longer than the second document length in Step S116. In a case where the CPU 51 determines that the first document length is longer than the second document length (Step S116: YES), the CPU 51 proceeds to Step S117. In a case where the CPU 51 determines that the first document length is not longer than the second document length (that is, the first document length is shorter than the second document length) (NO in Step S116), the CPU 51 proceeds to Step S118.

The CPU 51 executes an image enlargement process in Step S117 and proceeds to Step S105. In the image enlargement process, the CPU 51 enlarges the read image read by the reading unit 26 or the reading units 26 and 27 in the transport direction. In this case, the CPU 51 increases the length of image information of the read image in the transport direction, for example, according to the difference or ratio between the first document length and the second document length. The image enlargement process is an example of a correction process of correcting the length of the image information of the read image.

In the image enlargement process, a process of notifying the user may be executed. In the process, the CPU 51 notifies the user of, for example, an abnormality in image reading. Specifically, for example, a notification, such as "Since there was an abnormality in reading the image of the document G, the read image of the document G was automatically corrected.", is displayed on the display unit 42. The process is an example of the notification process.

The CPU 51 executes an image reduction process in Step S118 and proceeds to Step S105. In the image reduction process, the CPU 51 reduces the read image read by the reading unit 26 or the reading units 26 and 27 in the transport direction. In this case, the CPU 51 reduces the length of the image information of the read image in the transport direction, for example, according to the difference or ratio between the first document length and the second document length. The image reduction process is an example of the correction process of correcting the length of the image information of the read image.

In the image reduction process, a process of notifying the user may be executed. In the process, the CPU 51 notifies the user of, for example, an abnormality in image reading. Specifically, for example, a notification, such as "Since there was an abnormality in reading the image of the document G, the read image of the document G was automatically corrected.", is displayed on the display unit 42. The process is an example of the notification process.

As described above, in the present modification example, in a case where the first document length and the second document length measured from the transported document G are different from each other in the image reading apparatus 10, the CPU 51 executes the correction process of correcting the length of the image information of the read image.

Therefore, in a case where the actual document length and the second document length are equal to each other, the execution of the correction process is suppressed, as compared to a case where, in a case where the first document length and the second document length designated by the user are different from each other in the image reading apparatus 10, the CPU 51 executes the correction process.

In addition, in the present modification example, in a case where the second document length is longer than the first document length, the length of the image information is reduced as the correction process. In a case where the second document length is shorter than the first document length, the length of the image information is increased as the correction process.

This makes it easier to match the length of the image information with the actual length, as compared to a case where, in a case where the first document length and the second document length are different from each other, the CPU 51 always executes the process of reducing the length of the image information as the correction process.

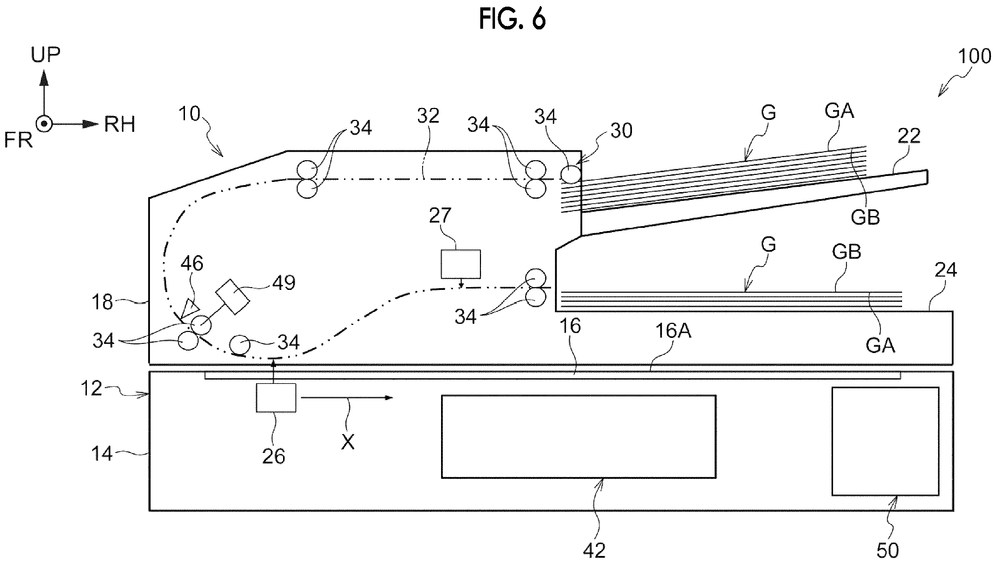

Further, in the present modification example, the CPU 51 may acquire variation information of the transport speed of the document G and perform the correction process. In this case, the image reading apparatus 10 includes a detection unit 49 that detects a variation in the transport speed of the document G as shown in FIG. 6. For example, an encoder that detects a variation in the rotation speed of the transport member 34 that transports the document G being read as the variation in the transport speed of the document G can be used as the detection unit 49. Further, a sensor that detects a change in the load of the transport member 34 over time as the variation in the transport speed of the document G may be used as the detection unit 49. In addition, a sensor that detects a change in the motor load of a driving motor of the transport member 34 as the variation in the transport speed of the document G may be used as the detection unit 49. Furthermore, the transport member 34 that transports the document G being read is also referred to as a transport member 34 that comes into contact with the document G being read.

In addition, the CPU 51 may acquire the variation information of the transport speed of the document G, locally reduce the length of the image information based on the variation information as the correction process in a case where the second document length is longer than the first document length, and locally increase the length of the image information based on the variation information as the correction process in a case where the second document length is shorter than the first document length.

This makes it easier to match the length of each portion of the image information with the actual length, as compared to a case where the CPU 51 executes a process of uniformly reducing the overall length of the image information as the correction process in a case where the second document length is longer than the first document length and executes a process of uniformly increasing the overall length of the image information as the correction process in a case where the second document length is shorter than the first document length.

In addition, a configuration may be adopted in which the user can select a correction process of locally correcting the length of the image information based on the variation information and a correction process of uniformly correcting the overall length of the image information.

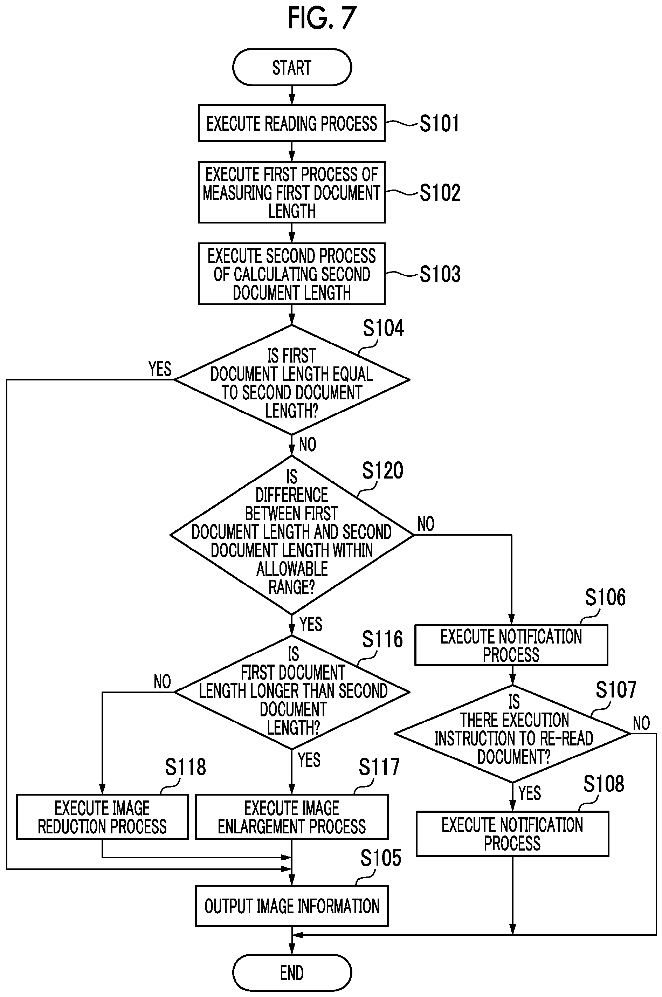

In addition, in the present modification example, as shown in FIG. 7, either the notification process (Step S106) or the correction process (Steps S116 and S117) may be performed depending on whether or not the difference between the first document length and the second document length is within the allowable range. Specifically, as shown in FIG. 7, in a case where the CPU 51 determines that the first document length and the second document length are not equal to each other (Step S104: NO), the CPU 51 proceeds to Step S120. In Step S120, the CPU 51 determines whether or not the difference between the first document length and the second document length is within the allowable range. In a case where the CPU 51 determines that the difference is within the allowable range (Step S120: YES), the CPU 51 proceeds to Step S116. In a case where the CPU 51 determines that the difference is not within the allowable range (NO in Step S120), the CPU 51 proceeds to Step S106. The allowable range is, for example, a range in which the correction process (specifically, the image enlargement process and the image reduction process) can be executed without causing an image defect such as image distortion. For example, a case where the difference between the first document length and the second document length is within a preset percentage (for example, 20%) can be set as the allowable range. The percentage can be set to any value.

### <Other Modification Examples>

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

In addition, the program of the present application may be provided as a program product.

The present invention is not limited to the above-mentioned exemplary embodiment, and various modifications, changes, and improvements can be made without departing from the gist of the present invention. For example, two or more of the above-described modification examples may be configured to be combined with each other as appropriate.

### (Supplementary Notes)

(((1))) An information processing system comprising:
   a processor configured to:
   in a reading apparatus that transports a document and reads an image of the document, in a case where a first document length measured from the transported document and a second document length calculated from the read image are different from each other, execute at least one of a notification process of notifying a user or a correction process of correcting a length of image information of the read image.
(((2))) The information processing system according to (((1))), wherein the processor is configured to:
   in a case where the second document length is longer than the first document length, reduce the length of the image information as the correction process; and
   in a case where the second document length is shorter than the first document length, increase the length of the image information as the correction process.
(((3))) The information processing system according to (((2))), wherein the processor is configured to:
   acquire variation information of a transport speed of the document;
   in a case where the second document length is longer than the first document length, locally reduce the length of the image information based on the variation information as the correction process; and
   in a case where the second document length is shorter than the first document length, locally increase the length of the image information based on the variation information as the correction process.
(((4))) The information processing system according to any one of (((1))) to (((3))), wherein the processor is configured to:
   in the reading apparatus, in a case where the first document length and the second document length are different from each other, provide a notification to prompt re-reading of the document to the user as the notification process.
(((5))) The information processing system according to (((4))), wherein the processor is configured to:
   in a case where an execution instruction to re-read the document is acquired, transport the document at a speed lower than a transport speed before the re-reading to read the image or read the image of the document in a stationary state.
(((6))) An information processing program causing a computer to execute a process comprising:
   in a reading apparatus that transports a document and reads an image of the document, in a case where a first document length measured from the transported document and a second document length calculated from the read image are different from each other, executing at least one of a notification process of notifying a user or a correction process of correcting a length of image information of the read image.
(((7))) An image reading apparatus comprising:
   a transport unit that transports a document;
   a reading unit that reads an image of the document; and
   an execution unit that, in a case where a first document length measured from the document transported by the transport unit and a second document length calculated from the read image read by the reading unit are different from each other, executes at least one of notifying a user or correcting a length of image information of the read image.

According to the configuration of (((1))), as compared to a case where the processor executes at least one of the notification process or the correction process in a case where the first document length designated by the user and the second document length calculated from the read image are different from each other in the reading apparatus, the execution of at least one of the notification process or the correction process is suppressed in a case where the actual document length and the second document length are equal to each other.

According to the configuration of (((2))), it is easier to match the length of the image information with the actual length, as compared to a case where the processor always reduces the length of the image information as the correction process in a case where the first document length and the second document length are different from each other.

According to the configuration of (((3))), it is easier to match the length of each portion of the image information with the actual length, as compared to a case where the processor uniformly reduces the overall length of the image information as the correction process in a case where the second document length is longer than the first document length and uniformly increases the overall length of the image information as the correction process in a case where the second document length is shorter than the first document length.

According to the configuration of (((4))), it is easier for the user to recognize that the document needs to be re-read, as compared to a case where the processor notifies the user only that the first document length and the second document length are different from each other in a case where the first document length and the second document length are different from each other in the reading apparatus.

According to the configuration of (((5))), in a case where the processor always executes the same reading operation, the read image is less likely to be enlarged and reduced in the re-reading of the document.

According to the configuration of (((6))), as compared to a case where the processor executes at least one of the notification process or the correction process in a case where the first document length designated by the user and the second document length calculated from the read image are different from each other in the reading apparatus, the execution of at least one of the notification process or the correction process is suppressed in a case where the actual document length and the second document length are equal to each other.

According to the configuration of (((7)))), as compared to a case where the execution unit executes at least one of notifying the user or correcting the length of the image information of the read image in a case where the first document length designated by the user and the second document length calculated from the read image are different from each other, the execution of at least one of the notification or the correction is suppressed in a case where the actual document length and the second document length are equal to each other.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10, 110: image reading apparatus (example of reading apparatus)
26, 27: reading unit
30: transport unit
51: CPU (example of processor, example of execution unit)
100: image reading system (example of information processing system)
G: document

## Claims

1. An information processing system comprising:
a processor configured to:
in a reading apparatus that transports a document and reads an image of the document, in a case where a first document length measured from the transported document and a second document length calculated from the read image are different from each other, execute at least one of a notification process of notifying a user or a correction process of correcting a length of image information of the read image.

2. The information processing system according to claim 1, wherein the processor is configured to:
in a case where the second document length is longer than the first document length, reduce the length of the image information as the correction process; and
in a case where the second document length is shorter than the first document length, increase the length of the image information as the correction process.

3. The information processing system according to claim 2, wherein the processor is configured to:
acquire variation information of a transport speed of the document;
in a case where the second document length is longer than the first document length, locally reduce the length of the image information based on the variation information as the correction process; and
in a case where the second document length is shorter than the first document length, locally increase the length of the image information based on the variation information as the correction process.

4. The information processing system according to any one of claims 1 to 3, wherein the processor is configured to:
in the reading apparatus, in a case where the first document length and the second document length are different from each other, provide a notification to prompt re-reading of the document to the user as the notification process.

5. The information processing system according to claim 4, wherein the processor is configured to:
in a case where an execution instruction to re-read the document is acquired, transport the document at a speed lower than a transport speed before the re-reading to read the image or read the image of the document in a stationary state.

6. An information processing program causing a computer to execute a process comprising:
in a reading apparatus that transports a document and reads an image of the document, in a case where a first document length measured from the transported document and a second document length calculated from the read image are different from each other, executing at least one of a notification process of notifying a user or a correction process of correcting a length of image information of the read image.

7. An image reading apparatus comprising:
a transport unit that transports a document;
a reading unit that reads an image of the document; and
an execution unit that, in a case where a first document length measured from the document transported by the transport unit and a second document length calculated from the read image read by the reading unit are different from each other, executes at least one of notifying a user or correcting a length of image information of the read image.
